Europäisches Patentamt

European Patent Office

Office européen des brevets

(11) Publication number: **0 343 245**

**A1**

## EUROPEAN PATENT APPLICATION

published in accordance with Art. 158(3) EPC

(21) Application number: **87907982.0**

(22) Date of filing: **04.12.87**

Data of the international application taken as a basis:

(86) International application number:
**PCT/JP87/00940**

(87) International publication number:
**WO89/05227 (15.06.89 89/13)**

(51) Int. Cl.³: **B 29 C 51/10**
**B 29 C 51/12, B 29 C 51/16**
**B 32 B 31/20**

(43) Date of publication of application:
**29.11.89 Bulletin 89/48**

(84) Designated Contracting States:
**DE FR GB IT SE**

(71) Applicant: **MEIWA INDUSTRY CO. LTD.**
**33, Onna, Atsugi-shi**
**Kanagawa 243(JP)**

(72) Inventor: **SUZUKI, Nobushige**
**387-36, Sekiya**
**Kamakura-shi Kanagawa 247(JP)**

(74) Representative: **Jackisch, Walter, Dipl.-Ing. et al,**
**Patentanwalt W. Jackisch & Partner Menzelstrasse 40**
**D-7000 Stuttgart 1(DE)**

(54) **METHOD OF MANUFACTURING DECORATIVE SHEET-CARRYING LAMINATED MOLDING.**

(57) A method of manufacturing a laminated molding in which a decorative sheet is stuck to a predetermined region of a surface material covering the surface of a substrate in such a manner that the end portions of the decorative sheet are hidden within a resultant laminate. To practise this method, partitions are provided in the molding surface of one mold, and a gas-permeable decorative sheet is laid on a predetermined region defined by the partitions. The end portions of the décorative sheet are turned up along the inner surfaces of the partitions, and a surface material is then vacuum molded over the whole molding surface of the same mold via the decorative sheet. With the surface material fixed to the molding surface, a substrate material in a molten state is placed on the surface material, or on the molding surface of the other mold, and these two molds are then clamped to obtain a decorative sheet-carrying laminated molding.

1

DESCRIPTION

# METHOD OF PRODUCING LAMINATED FORMED
# MEMBER WITH DECORATIVE SHEET

**Technical field:**

This invention relates to a method of producing a laminated formed member with a decorative sheet applied to a predetermined region on a mounting member which covers a base.

**Background art:**

Nowadays articles formed of synthetic resinous material are seen, the appearance of which is improved by applying a decorative sheet to a surface portion of an interior part for vehicles, an architectural part for ornament, an electrical appliance for household use, so as to locally vary the material and color of the article., Various devices have been also made to the method of treating the end portions of the decorative sheet, but the process steps thereof were cumbersome or the products were poor in appearance.

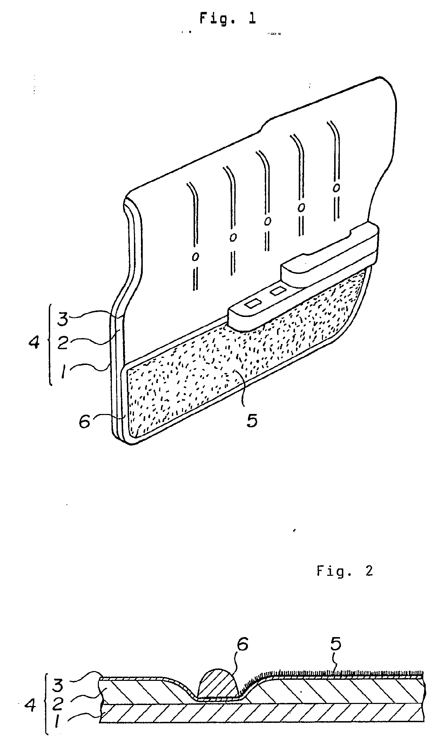

For example, in a door trim of a vehicle, a decorative sheet called ornament is attached to the upper or lower portion of an armrest, said sheet being different in material or color from a surface layer at the other portion of the door trim. Figs. 1 and 2 show one example of the door trim comprising a laminated formed member 4 composed of a base 1 consisting of a hard board coated with a vinyl chloride resin paint, a urethane foam 2 capable of effecting thermal adhesion by means of a welder and a soft polyvinyl chloride sheet 3. A decorative sheet 5 such as carpet or the like is attached to the surface of the soft polyvinyl chloride sheet 3 at a predetermined region thereof using a molding material 6 made of vinyl chloride resin. The molding material 6 serves to hide the end portions of the decorative sheet 5 and join the molding material 6 and the base 1 through the decorative sheet 5 by thermal adhesion into a unitary structure by means of a high frequency welder so that the decorative sheet 5 is firmly bonded to the laminated formed member 4.

However with the method of attaching the decorative sheet 5 to the surface of the laminated formed member 4 in the door trim mentioned above, difficulty has been experienced in fixing in place by thermal adhesion the end portions of the decorative sheet 5 to the base on the surface of the soft polyvinyl chloride sheet 3 within a range of width of the surface portion of the molding material 6 to be joined by thermal adhesion. As a result, troubles have often been caused including that the end portions of the decorative sheet 5 are located outside the molding material 6 or a gap is formed between the decorative sheet 5 and the molding material 6 to expose the soft polyvinyl chloride sheet 3 to view. Further there was a case where use of the molding material 6 is not preferable from a design point of view.

**Disclosure of the invention:**

A method of producing a laminated formed member with a decorative sheet according to the present invention comprises equipping the entire forming pattern of one of a pair of forming molds with a vacuum forming function, said forming molds when closed forming a cavity in a predetermined form,

3

and providing partition means in a desired position on the forming pattern; placing the air permeable decorative sheet with the surface thereof directed toward the forming pattern at a predetermined region thereon defined by the partition means; extending outwardly the end portions of the decorative sheet along the inner face of the partition means or further engaging the end portions of the decorative sheet extended outwardly with the top of the partition means; subsequently effecting vacuum forming of a mounting material over the entire forming pattern of said one of the forming molds partially through the decorative sheet; placing a measured base material in a molten state on the mounting material or on the forming pattern of the other of the forming molds with the decorative sheet and the mounting material being drawn by suction into contact with the forming pattern; and then closing said a pair of forming molds to effect compression forming. In this way, the problems in the prior art can be solved by the method according to the invention.

Since the method of producing the laminated formed member with the decorative sheet according to the invention comprises the above-mentioned process steps, the laminated formed member which is produced by simple operations comprising placing the decorative sheet on the forming pattern of the forming mold and extending the ends of the decorative sheet outwardly along the partition means or further engaging said ends with the top of the partition means, followed by subsequent vacuum forming of the mounting material and compression forming of the base material, enables the ends of the decorative sheet to be hidden in the interior of the laminated formed member.

The base material is in a molten state and can be precis-

4

ely measured with an accuracy better than 1 weight % and placed in a dispersed state directly or indirectly on the forming pattern of the forming mold with a proper pattern, so that any depressions are not formed on the laminated formed member due to less charging of the base material and any flashes are not produced due to excess filling of the base material, and the surface of the laminated formed member is covered with the surface layer material so that any charge marks or flow marks do not appear on the surface, thereby providing the formed member excellent in appearance together with the existence of the decorative sheet.

Since the base material is formed by a compression forming method, reinforcing ribs may be formed on the back side of the laminated formed member by providing grooves on the forming pattern of the compression forming mold. Accordingly the formed member which is light in weight and stronger may be obtained as compared with the case where the base material in the form of sheet is formed by a vacuum forming method.

**Brief explanation of the drawings:**

Fig.1 is a perspective view of a conventional formed member with a decorative sheet;

Fig.2 is a fragmentary sectional view of the formed member in Fig.1;

Fig.3 is a sectional view of an essential portion of an embodiment of the present invention illustrating the positions of a pair of forming molds and various types of materials;

Fig.4 is a sectional view of an essential portion of the forming molds in Fig.3 which has been closed;

5

Fig.5 is a sectional view of the forming mold obtained;

Fig.6 is a side view of a device for placing a base material in a dispersed state; and

Fig.7 is a sectional view of another embodiment of the invention illustrating the positions of a pair of forming molds and various types of materials.

**Best mode for carrying out the invention:**

An embodiment of the invention will be explained with reference to the drawings.

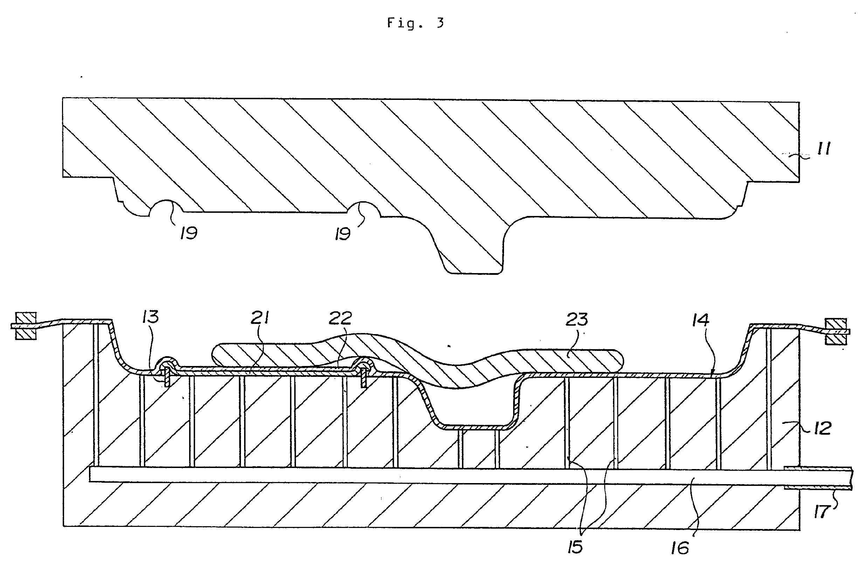

Fig.3 is a sectional view of an essential portion illustrating the positions of a pair of forming molds and various laminated materials when for example a door trim for a passenger car is produced by a method of producing a laminated formed ember with a decorative sheet according to the invention.

In this embodiment, a lower mold 12 of a pair of forming molds which, when closed, form a cavity corresponding to the configuration of a predetermined door trim has a number of air vent holes 15 on a forming pattern 14 which open outwardly over the entire surface. The air vent holes 15 are connected at the other ends to an air vent cavity 16, which is in turn connected to a vacuum pump not shown, through an air vent pipe 17.

Partition means consisting of partition walls 13 is located on the forming pattern 14 of the lower mold 12 in a desired position corresponding to the contour of outer edge of a portion to which a decorative sheet 21 for a door trim is applied.

The decorative sheet 21 is placed within the partition walls with its surface in contact with the forming pattern

6

14. The end portions of the decorative sheet 21 are extended outwardly along the inner face of the partition walls 13 and engaged with the top of the partition walls 13.

Then vacuum forming of a mounting material 22 softened by a heating device not shown is performed to the entire forming pattern of the lower mold 12 partially through the decorative sheet 21.

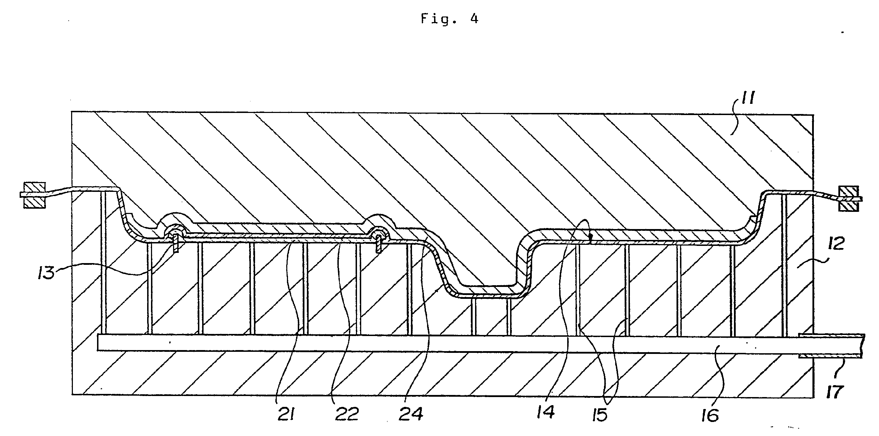

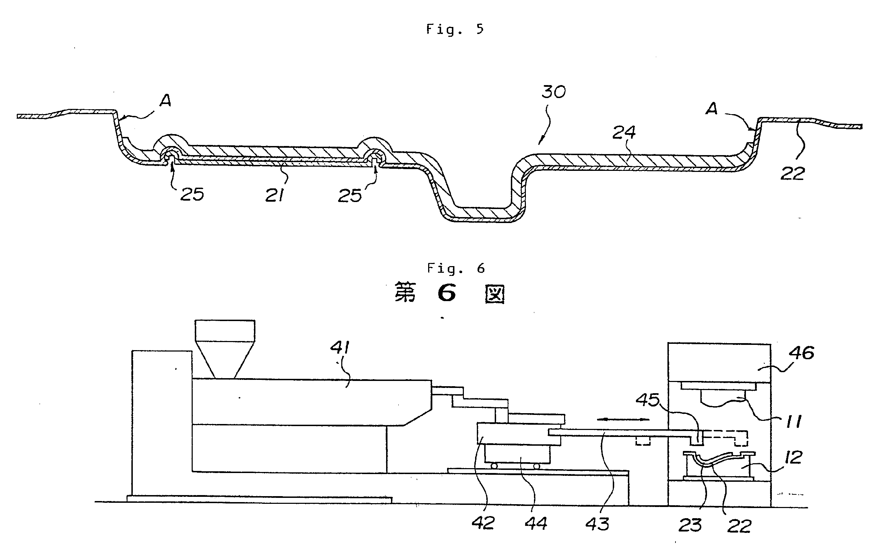

A base material 23 in a molten state measured precisely with an accuracy better than 1 weight % is placed in a predetermined position on the upper surface of the formed mounting material 22 with the same being drawn to the forming pattern 14 by suction. As shown in Fig.4, the upper and lower molds 11 and 12 are subsequently closed by a hydraulic press not shown, and after both of the molds 11,12 are cooled, they are opened to remove a formed member, thus providing the laminated formed member 30 shown in Fig.5. Useless portions of the mounting material 22 of the laminated formed member 30 are cut off in the positions shown at A in Fig.5, and the cut end portions are folded back to the back side of the base 24 obtained by forming the base material 23 and firmly bonded to the base 24 by means of an adhesive agent or push rivets, thereby providing a door trim.

The diameter of the air vent holes 15 which open on the forming pattern 14 of the lower mold 12 is determined taking into consideration the material of the decorative sheet 21 and the mounting material 22 and the forming pressure during compression forming. That is, when the diameter of the hole is less, the capacity of evacuation thereof is poor and this requires increase in the number of holes, and when the diameter of the hole is greater, irrecoverable traces of the holes are often left on the surfaces of the decorative sheet

7

21 and the mounting material 22 due to the pressure during compression forming of the base material 23. Accordingly the diameter of the hole is usually adopted in a range of 0.2 to 2.0 mm.

The decorative sheet 21 used in the present invention may be formed of air permeable sheet of synthetic resin, woven cloth, nonwoven cloth, knit, carpet and composite laminated sheet of their materials. Any adhesive agent may be applied to the back side of the decorative sheet 21 to such a degree that any permeability thereof is not impaired, to thereby make stronger the bond between the decorative sheet 21 and the mounting material 22. When the decorative sheet 21 is made of material greater in thickness or the forming pattern 14 is complicatedly uneven at a predetermined region enclosed by the partition walls 13 on the forming pattern 14, the decorative sheet 21 before being placed thereon may be preferably preformed by a different forming mold so that it extends along the forming pattern to be placed, including a portion engaged with the partition walls 13.

The mounting material 22 may be formed of a single layer of only non-foamed thermoplastic material selected from thermoplastic synthetic resin and thermoplastic elastomer, and besides also formed of a laminated sheet composed of said single layer sheet and extensible fibrous material such as knit having a followable property of forming, a laminated sheet having said single layer sheet to which highly foamed material such as PVC, PE, PP, polyurethane or the like is joined, a laminated sheet of said extensible fibrous material and said highly foamed material, and a laminated sheet of various combination thereof. When a protective film is applied to the back side of a single layer sheet or laminated sheet for the mounting material 22, that is, the side

8

directed to the base material 23, it prevents said single layer sheet or laminated sheet from being softened and cut off due to the friction caused when the base material 23 flows and the heat of the same, or prevents cells of highly foamed material from being partially destroyed by heat. If the mounting material 22 contains a bulky layer of highly foamed material, when both of the molds 11 and 12 are moved toward each other by closing operation of the molds, the cavity formed by both of the molds 11 and 12 nearly filled with the mounting material 22 which is held on the forming pattern 14 of the lower mold 12 and therefore a region of flow for the base material 23 is closed. However in this case, if the mounting material 22 has on its back face the above-mentioned protective film applied thereto, the protective film causes the base material 23 to compress said layer of highly foamed material to thereby reduce the volume of the layer of highly foamed material and to smoothly flow so that the space of the cavity may be completely filled. In addition, such protective film also functions to make stronger the bond between the mounting material 22 and the base material 23.

When the base material 23 to be laminated is formed of polyolefin material and the back face of the mounting material 22 to be brought into contact with the base material 23 has polyolefin highly foamed material, a film of 0.2 to 0.7 mm in thickness produced from olefin thermoplastic elastomer including rubber component of 30 to 70%, which thermoplastic elastomer is used singly or blended with olefin resin, is used for the protective film with said film being applied beforehand to the back face of the mounting material 22. Moreover in a case where the base material 23 is formed of ABS resin and the mounting material 22 of a soft sheet of polyvinyl chloride resin, a film produced from a blended product of both of the resins is suitable for the protective film.

The base material 23 is formed of thermoplastic resin such as PE, PP, ABS, polyacetal, polycarbonate or the like, which is used singly or blended with each other. It is further possible to add to the above-mentioned materials inorganic filler or reinforcement such as calcium carbonate, glass fiber or the like and organic filler or reinforcement such as wood flour, fibrous material or the like. Moreover, thermosetting resin which is flowable by heating before complete setting or rubber compound is similarly used for the base material 23.

As shown in Fig.6, the base material 23 is stored once within a measuring cylinder 42 via the steps of heating, mixing and melting by means of an extruder 41, and mechanically placed on the mounting material 22 on the lower mold 12 by means of a distributing device which permits the base material to be charged with an accuracy better than 1 weight % of a prescribed amount and with a suitable pattern and a proper distribution of weight by moving a die 45 in position over the lower mold 12 by a pulse motor 44 through a joint arm 43 which is freely actuated to the right and left as viewed in the drawing. A hydraulic press 46 is then operated to close the upper and lower molds 11 and 12 together with the decorative sheet 21 and the mounting material 22 clearly shown in Fig.3, thereby producing a laminated formed member 30 with the decorative sheet.

The operation of placing the base material may be easily carried out with an accuracy of better than 1 weight % as mentioned above by using for example a stamping molding machine of ISM-800 type made by IKEGAI Corporation for the.

distributing device of the base material 23. Alternatively, it is possible to cut out sheets in the form of long strip having a certain width and thickness into a predetermined length from a mixing roll and manually place them in predetermined positions.

The partition walls 13, which are embedded in predetermined positions on the forming pattern 14 of the lower mold 12, consist of proper band material such as band metal, band saw or the like. Other partition means may be also used, which is constituted by a plurality of needle-shaped members firmly provided on the forming pattern 14 at suitable intervals, said partition means each extending from the forming pattern 14 by 3 to 20 mm, the thickness of the partition walls 13 corresponds to the width of recesses 25 of the completed laminated formed member 30 with the decorative sheet shown in Fig.5, that is, a gap in a boundary between the mounting material 22 and the decorative sheet 21 in the surface of the formed member 30. Accordingly the thickness of the partition walls 13 is preferably smaller so long as they do not deform during vacuum and compression forming, but it is within a range of 0.2 to 3.0 mm. In a case where the decorative sheet 21 is formed of carpet with long piles or material to which piles are flocked and the mounting material 22 is the laminated sheet including highly foamed material, it is reduced in thickness during compression forming of the base material 23 and then restored to its original thickness when the product has been removed from the forming mold, so that the above-mentioned gap between the mounting material 22 and the decorative sheet 21 may be filled up.

In the above-mentioned embodiment, the end portions of the decorative sheet 21 are extended outwardly along the

11

inner face of the partition walls 13 and then engaged with the top of the partition walls 13, but operation may be effected simply by extending outwardly along the inner face of the partition walls 13 the end portions of the decorative sheet 21 which are cut into a predetermined configuration and preformed as required. However if the end portions of the decorative sheet 21 are extended outwardly and engaged with the top of the partition walls, it positively prevents the decorative sheet 21 from being shifted during vacuum forming of the mounting material 22.

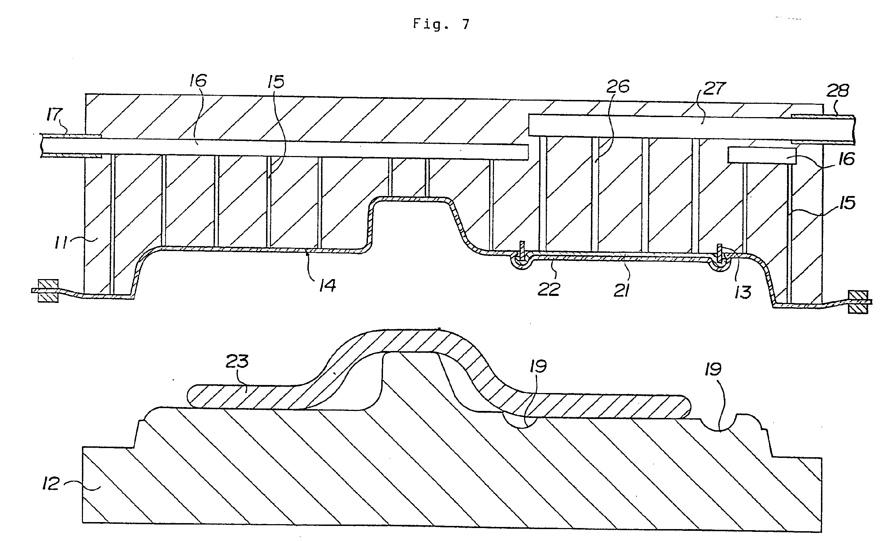

In the above-mentioned embodiment, the method of producing the laminated formed member with the decorative sheet 21 is described, which comprises providing the forming pattern 14 of the lower mold 12 with a function of evacuation and further providing the forming pattern 14 with the partition walls 13, but alternatively, as shown in Fig.7, a laminated formed member with a decorative sheet may be also produced by the steps of providing the forming pattern of the upper mold 11 with a function of evacuation, providing the forming pattern 14 of the upper mold 11 with the partition walls 13, placing the decorative sheet 21 on the forming pattern 14 by drawing air by evacuation into intimate contact therewith, performing vacuum forming of the mounting material 22 to the upper mold 11, and subsequently placing the base material 23 in a molten state in a predetermined position on the forming pattern of the lower mold 12 and then closing the molds.

In this case, it is necessary to adhere the decorative sheet 21 to the forming pattern 14 of the upper mold 11 existing above, but when the decorative sheet 21 is higher in air permeability or greater in weight, it often occurs that the evacuation by a vacuum pump used for conventional vacuum forming is insufficient in the amount of evacuation

12

will the result that the decorative sheet 21 can not be held on the forming pattern 14.

In order to prevent such, it is preferable to provide the forming pattern 14 at a predetermined region defined by the partition walls 13 for holding the decorative sheet 21, with second air vent holes 26 which are provided separately from the air vent holes 15 at the region other than the predetermined region of the forming pattern 14 and which are greater in diameter than the air vent holes 15, connect the other ends of the second air vent holes 26 to a second air vent cavity 27, and further connect the second air cavity 27 to an exhaust blower not shown through a second air vent pipe 28. A turbo fan of the type of blade curved at the rear which provides higher wind pressure and has higher efficiency of static pressure is preferably used for the exhaust blower.

Besides, in effecting vacuum forming of the mounting material 22 to the lower mold 12 as shown in Fig.3, when the skin of the mounting material 22 is formed of a thermoplastic resin sheet, the lower mold with the forming pattern 14 having a textured pattern impressed beforehand thereon is provided and vacuum forming is effected so that the textured pattern is formed on the surface of the mounting material 22, with the result that ornamental effect is not only offered owing to the decorative sheet 21 but also the appearance of the laminated formed sheet looks very fine. In this case, it is preferable to impress a textured pattern beforehand also on the outer wall surface of the partition walls 13 outside the predetermined region. This is effective to prevent the portions which lack the textured pattern and look unnatural from being produced on the mounting material 22 in a boundary between the decorative sheet 21

13

and the mounting material 22.

The upper mold 11 of a pair of forming molds shown in Fig.3 and the lower mold 12 shown in Fig.7 are each provided with grooves 19. These grooves are provided in positions corresponding to the partition walls 13 of the forming molds opposed to each other and serve to smooth the flow of the base material 23 during vacuum forming, but further grooves may be provided on the forming pattern in positions other than those corresponding to the partition walls 13 so that they may form reinforcing ribs on the laminated formed member. The provision of the reinforcing ribs in proper positions enables the thickness of the entire base to be reduced, thereby providing the laminated formed member which is light in weight and stronger as compared with a case where reinforcing ribs are not provided.

In the above-mentioned embodiment, the predetermined region defined by the partition walls has been explained as one region, but a plurality of said regions may be provided. In a case where it is not necessary to hide a part of the end portions of the decorative sheet 21 within the recess 25 (Fig.5) of the laminated formed sheet 30, the partition walls 13 at such part is not required and there is therefore no necessary to provide the partition walls 13 over the entire periphery of the predetermined region where the decorative sheet 21 is placed.

**Probability of use in industry:**

The method of producing the laminated formed member with the decorative sheet according to the invention constituted as shown and described above includes the probability of use in industry as follows:

14

The end potions of the decorative sheet can be hidden within the interior of the laminated formed member by simple operation, accordingly operation of applying the decorative sheet in a later step is eliminated, the decorative sheet can be applied to a desired position on the laminated formed member without any offset in position and simultaneously with the forming operation, and further the laminated formed member looks fine because of the invisible end portions of the decorative sheet, thereby increasing the ornamental effect of the decorative sheet.

The laminated formed member with the decorative sheet produced by the method of production according to the invention may be applied as interior material for a vehicle, for example to a door trim with a decorative sheet called ornament which is attached to the upper or lower portion of an armrest, and further to front, center and rear pillar trims, a roof panel, an instrument board, various lids or the like. In addition, the present invention may be widely used in other fields for ornament in surface of an architectural part or an electrical appliance for household use.

# CLAIM

A method of producing a laminated formed member with a decorative sheet, comprising equipping the entire forming pattern of one of a pair of forming molds with a vacuum forming function, said forming molds when closed forming a cavity in a predetermined form, and providing partition means in a desired position on the forming pattern; placing an air permeable decorative sheet with the surface thereof directed to the forming pattern at a predetermined region thereon defined by said partition means; extending outwardly the end portions of the decorative sheet along the inner face of the partition means or further engaging the end portions of the decorative sheet extended outwardly with the top of the partition means; subsequently effecting vacuum forming of a mounting material over the entire forming pattern of said one of the forming molds partially through the decorative sheet; placing a base material measured in a molten state on the mounting material or on the forming pattern of the other of the forming molds with the decorative sheet and the mounting material being drawn by suction into contact with the forming pattern, and then after closing said a pair of forming molds, effecting compression forming.

Fig. 1

Fig. 2

Fig. 3

Fig. 4

Fig. 5

Fig. 6

第 6 図

0343245

Fig. 7

5/5

034324245

**I. CLASSIFICATION OF SUBJECT MATTER** (if several classification symbols apply, indicate all) 8

According to International Patent Classification (IPC) or to both National Classification and IPC

Int.Cl⁴ B29C51/10, B29C51/12, B29C51/16, B32B31/20

**II. FIELDS SEARCHED**

| Minimum Documentation Searched 4 | |
|---|---|
| Classification System | Classification Symbols |
| IPC | B29C51/08-51/16, B32B27/12, B32B31/20 |

| Documentation Searched other than Minimum Documentation to the Extent that such Documents are Included in the Fields Searched 5 | |
|---|---|
| Jitsuyo Shinan Koho | 1926 – 1987 |
| Kokai Jitsuyo Shinan Koho | 1971 – 1987 |

**III. DOCUMENTS CONSIDERED TO BE RELEVANT 14**

| Category * | Citation of Document, 16 with indication, where appropriate, of the relevant passages 17 | Relevant to Claim No. 18 |
|---|---|---|
| X | JP, A, 60-48324 (Meiwa Industry Co., Ltd.) 16 March 1985 (16. 03. 85) Claims 1, 2 and Specificaiton, page 2, upper right column, line 12 to specification, page 3, upper right column, line 12 (Family: none) | 1 |
| Y | JP, A, 54-10367 (Honda Motor Co., Ltd.) 25 January 1979 (25. 01. 79) Claim and Figs. 3, 4 (Family: none) | 1 |
| A | JP, B, 48-38783 (Meiwa Industry Co., Ltd.) 20 November 1973 (20. 11. 73) (Family: none) | 1 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search 3 | Date of Mailing of this International Search Report 2 |
|---|---|
| February 10, 1988 (10.02.88) | February 22, 1988 (22.02.88) |
| International Searching Authority 1 | Signature of Authorized Officer 20 |
| Japanese Patent Office | |